# EUROPÄISCHE PATENTSCHRIFT

(11) **EP 0 747 621 B1**
(45) Veröffentlichungstag und Bekanntmachung des Hinweises auf die Patenterteilung: **02.08.2000**
(21) Anmeldenummer: 96108548.7
(22) Anmeldetag: 29.05.1996
(51) Int. Cl.: F16L 19/03

(54) **Hydraulisches Steuerventil in Modulbauweise**
Hydraulic control valve in modular design
Vanne-pilote hydraulique en dessin modulaire

(30) Priorität: 08.06.1995 DE 29509377 U
(43) Veröffentlichungstag der Anmeldung: 11.12.1996
(73) Patentinhaber: ROBERT BOSCH GMBH, 70442 Stuttgart (DE)
(72) Erfinder: Duby, Michel, Dipl.-Ing., 74800 La Roche sur Foro (FR)

(56) Entgegenhaltungen:
- FR-A- 2 594 106
- GB-A- 2 059 532
- GB-A- 2 263 513
- US-A- 5 257 835

## Beschreibung

### Stand der Technik

Die Erfindung geht aus von einem hydraulischen Steuerventil in Modulbauweise nach der im Oberbegriff des Anspruchs 1 näher angegebenen Gattung.

Es ist schon ein solches hydraulisches Steuerventil in Modulbauweise aus der DE 2 801 689 A1 bekannt, das als sog. Sperrblock oder Zwillingsrückschlagventil ausgeführt ist. Dabei hat das Gehäuse des Steuerventils Ausnehmungen, in denen Ventilelemente eingesetzt sind, wobei die Ausnehmungen durch stopfenartige Gewindeteile nach außen verschlossen sind. Ein zwischen Gehäuse und Gewindeteil angeordneter Dichtring liegt dabei an der Außenwand des Gehäuses an, so daß das Gewinde stromaufwärts von der Dichtstelle liegt und somit von Druckmittel umspült wird. In vielen Anwendungsfällen sind die Gehäuse bei derartigen Steuerventilen so groß ausgeführt, daß für die das Gehäuse durchdringenden Befestigungsbohrungen ausreichend Platz vorhanden ist.

Solche modulartigen Steuerventile werden vielfach als Zwischenplattenventile in einer Höhenverkettung oder einer Längsverkettung eingesetzt, wobei durchgehende Zuganker oder Schrauben zum Befestigen der Steuerventile aneinander verwendet werden. Dabei sind Zwischenplattenventile durch unterschiedliche, austauschbare Ventilelemente für verschiedene Funktionen vorgesehen, zum Beispiel als Drosselventil, Druckbegrenzungsventil, Druckregelventil, entsperrbares Rückschlagventil u.s.w. Bei ungünstigen Anwendungsfällen liegen nun die Befestigungsbohrungen und das Innengewinde im Gehäuse zum Befestigen der Gewindeteile sehr nahe beieinander, wobei einerseits für den Gewindeauslauf und andererseits für die sichere Abdichtung der Befestigungsbohrungen genügend Wandstärke vorhanden sein muß, da die Abdichtung in Bezug auf die Druckbeaufschlagung stromabwärts von dem Gewinde bzw. den Befestigungsbohrungen erfolgt. Die Abdichtung geschieht dabei an einem relativ großen Durchmesser, der vom hydraulischen Druck beaufschlagt wird, so daß die auftretenden Kräfte entsprechend groß sind und von einem dementsprechend dimensionierten Gewinde aufgefangen werden müssen.Dies alles kann bei einer Rationalisierung der Steuerventile, bei der insbesondere die Außenabmessungen des Gehäuses verringert werden sollen, ungünstig sein. Dies gilt insbesondere auch deswegen, weil bei solchen Zwischenplattenventilen bestimmte geometrische Außenabmessungen und Lochbilder für Befestigungsbohrungen festliegen und nicht verändert werden können, damit sie der Normung entsprechen.

### Vorteile der Erfindung

Das erfindungsgemäße hydraulische Steuerventil in Modulbauweise mit den kennzeichnenden Merkmalen des Anspruchs 1 hat demgegenüber den Vorteil, daß bei ihm die Abdichtung zwischen Gehäuse und Gewindeteil nach innen zu verlagert wird, so daß die Abdichtung stromaufwärts von den Befestigungsbohrungen und dem Gewinde zu liegen kommt. Auf diese Weise wird der wirksame Durchmesser der Abdichtung erheblich verringert, so daß auch dementsprechend kleinere Kräfte auf das Gewindeteil wirken und von ihm auf das Gehäuse übertragen werden müssen. Die Eingrifflänge des Gewindes kann dementsprechend kleiner ausgeführt werden. Da die Befestigungsbohrungen und das Gewinde nun auf der abgedichteten Seite liegen, kann der bisher benötigte Materialsteg zwischen Gewindeauslauf und Befestigungsbohrung entfallen; der Gewindeauslauf kann nun unmittelbar in die Befestigungsbohrung hineinragen, so daß sich damit insgesamt die Gewindelänge verkürzen läßt. Bei festliegender Geometrie der Befestigungsbohrungen kann nun deren Abstand von der Außenwand des Gehäuses, in welche das Gewindeteil eingeschraubt wird, gerade in ungünstigen Anwendungsfällen erheblich verringert werden, so daß das Gehäuse platzsparender baut. Gerade bei Steuerventilen mit genormten Lochbildern und unveränderbar festliegenden Abständen, kann bei mindestens gleichbleibender Durchflußleistung die Außenabmessung verringert werden. Dies ist besonders bei Zwischenplattenventilen von Bedeutung, wo eine Vielzahl von unterschiedlichen Funktionen nach einer Modulbauweise im gleichen Grundgehäuse angeordnet werden, um vor allem kostengünstige Baureihen zu ermöglichen.

Durch die in den Unteransprüchen aufgeführten Maßnahmen sind vorteilhafte Weiterbildungen und Verbesserungen des im Anspruch 1 angegebenen hydraulischen Steuerventils in Modulbauweise möglich, um die kompakte und kostengünstige Bauweise weiter zu verbessern.

### Zeichnung

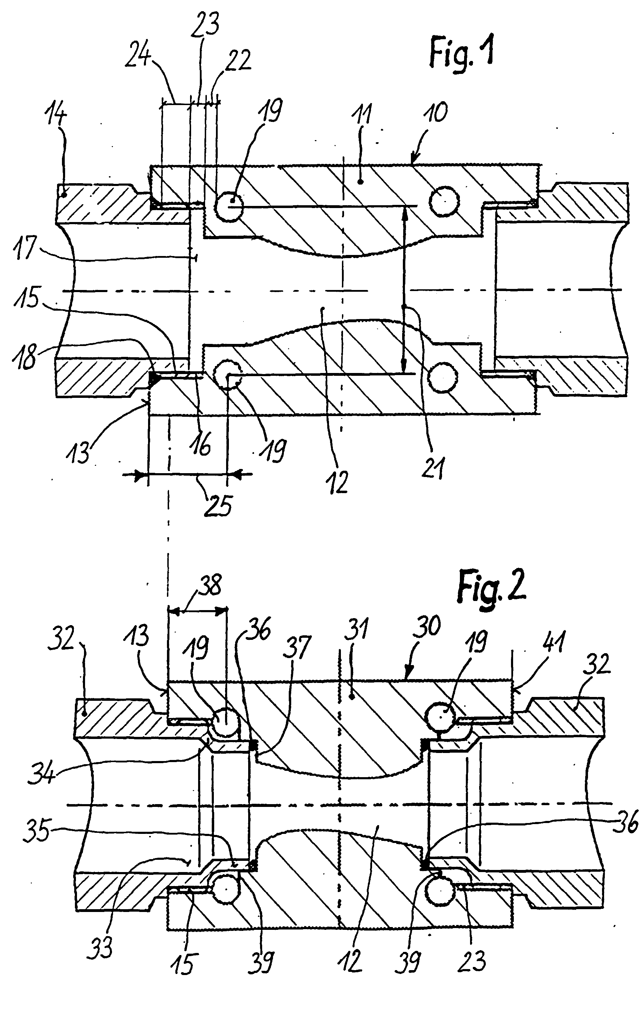

Ein Ausführungsbeispiel der Erfindung ist in der Zeichnung dargestellt und in der nachfolgenden Beschreibung näher erläutert. Es zeigen Figur 1 einen Längsschnitt durch den Gehäuseaufbau eines hydraulischen Steuerventils in Modulbauweise nach dem vorbekannten Stand der Technik in stark vereinfachter Darstellung und Figur 2 einen entsprechenden Längsschnitt durch den Gehäuseaufbau eines erfindungsgemäßen hydraulischen Steuerventils in Modulbauweise ebenfalls in vereinfachter Darstellung.

### Beschreibung des Ausführungsbeispiels

Die Figur 1 zeigt bei einem vorbekannten hydraulischen Steuerventil 10 in Modulbauweise in stark vereinfachter Darstellung den Gehäuseaufbau im Längsschnitt. Das Steuerventil 10 hat in einem Gehäuse 11 eine die nicht näher gezeichneten Ventilelemente aufweisende Ausnehmung 12, die an einer stirnseitigen Außenwand 13 des Gehäuses 11 durch ein Gewindeteil 14 verschlossen ist. Zu diesem Zweck weist das Gewindeteil 14 ein entsprechendes Außengewinde 15 auf, mit dem es in ein passendes Innengewinde 16 im Gehäuse 11 eingeschraubt ist. Das Innengewinde 16 liegt dabei in einer Öffnung 17, mit der sich die Ausnehmung 12 zu der Außenwand 13 hin öffnet. Zwischen das Gewindeteil 14 und das Gehäuse 11 ist an der Außenwand 13 ein Dichtring 18 eingelegt, welche die mit Druckmittel gefüllte Ausnehmung 12 nach außen hin abdichtet.

Wie Figur 1 ferner zeigt, wird das Gehäuse 11 in der Nähe des Innengewindes 16 von zwei Befestigungsbohrungen 19 durchdrungen, deren Achsabstand 21 etwa dem Durchmesser des Innengewindes 16 im Gehäuse 11 entspricht. Dieser Achsabstand 21 ist bei derartigen Steuerventilen 10, die als Zwischenplattenventile mit verschiedenen Funktionen verwendet werden, für verschiedene Durchflußgrößen genormt und liegt daher entsprechend den zugehörigen Lochbildern unveränderbar fest. Die an der Außenwand 13 liegende Dichtung 18 liegt in Bezug auf die Druckbeaufschlagung des hydraulischen Druckmittels somit stromabwärts von den Befestigungsbohrungen 19 und von dem Gewinde 15, 16. Um somit eine sichere Abdichtung der Befestigungsbohrungen 19 zu erreichen, darf der Materialsteg 22 zwischen der Befestigungsbohrung 19 und dem Innengewinde 16 eine gewisse Mindestgröße nicht unterschreiten. Außerdem ist für die Anordnung des Innengewindes 16 im Gehäuse 11 ein Gewindeauslauf 23 erforderlich, bei dem eine Mindestlänge nicht unterschritten werden kann. Damit verbleibt eine nutzbare, tragfähige Gewindelänge 24, deren Größe auf die zu übertragenden Kräfte abgestimmt werden muß. Entsprechend des relativ großen wirksamen Durchmessers der Dichtung 18 entstehen entsprechend große hydraulische Kräfte auf das Gewindeteil 14, welche über diese Gewindelänge 24 in das Gehäuse 11 übertragen werden müssen, so daß auch hier eine gewisse Mindestlänge nicht unterschritten werden darf. Alle diese Längen für Materialsteg 22, Gewindeauslauf 23 und tragende Gewindelänge 24 führen zu einem Abstand 25 zwischen den Befestigungsbohrungen 19 und der Außenwand 13, die in manchen Anwendungsfällen unerwünscht groß ist.

Die Figur 2 zeigt demgegenüber in vergleichbarer Darstellung einen Längsschnitt durch ein erfindungsgemäßes hydraulisches Steuerventil in Modulbauweise mit seinem Gehäuseaufbau. Dieses Steuerventil 30 unterscheidet sich vom Steuerventil 10 nach Figur 1 wie folgt, wobei für gleiche Bauelemente gleiche Bezugszeichen verwendet werden.

Beim Steuerventil 30 ist in ein Gehäuse 31 ein Gewindeteil 32 eingeschraubt, bei dem der das Außengewinde 15 tragende, hülsenförmige Abschnitt 33 über eine Schulter 34 in einen rohrförmigen Endabschnitt 35 mit kleinerem Durchmesser übergeht. An einer Stirnseite des Endabschnitts 35 liegt der Dichtring 36 an, der andererseits in einer abgesetzten Bohrung 37 im Gehäuse 31 liegt. Auf diese Weise ist die Abdichtung der Ausnehmung 12 nach innen verlagert, wobei der wirksame Durchmesser des Dichtrings 36 erheblich verkleinert ist. Der Dichtring 36 liegt nun in Bezug auf die Druckbeaufschlagung stromaufwärts von den Befestigungsbohrungen 19 und auch vom Gewinde 15, 16. Durch diese Lage der Abdichtung 36 kann ein vergleichbarer Materialsteg 22 wie in Figur 1 entfallen. Ferner läßt sich ein notwendiger Gewindeauslauf 23 in die Befestigungsbohrungen 19 hineinverlegen, so daß insgesamt die Gewindetiefe verkürzt werden kann. Durch den kleineren Durchmesser des Dichtrings 36 verringern sich auch die hydraulischen Kräfte auf das Gewindeteil 32, so daß dementsprechend auch die tragende Gewindelänge 24 verkürzt werden kann. Dies führt nun dazu, daß der mit dem Abstand 25 in Figur 1 vergleichbare Abstand 38 trotz gleichbleibender Geometrie der Befestigungsbohrungen 19 erheblich verkürzt und somit das Gehäuse 31 kompakter bauen kann. Dies ist besonders vorteilhaft deswegen, weil sich diese kompaktere Bauweise auf die gesamte Baureihe von Zwischenplattenventilen auswirkt.

Wie die Figur 2 ferner zeigt, durchdringt das Gewindeteil 32 mit seinem rohrförmigen Endabschnitt 35 eine durch die Befestigungsbohrungen 19 verlaufende, gedachte Ebene und ragt in den zylindrischen Abschnitt der abgesetzten Bohrung 37 hinein. Die abgesetzte Bohrung 37 beginnt dabei an einer Fläche 39, die tangential zu den Befestigungsbohrungen 19 verläuft.

Weiterhin ist in Figur 2 an der rechten Außenwand 41 des Gehäuses 31 ein gleiches Gewindeteil 32 eingeschraubt, wobei jedoch der Abstand der Befestigungsbohrungen 19 von der Außenwand 41 größer ist als der Abstand 38 von der linken Außenwand 13. Durch die nach innen verlagerte Abdichtung mit dem Dichtring 36 bleiben auch hier die Vorteile des erfindungsgemäßen Steuerventils 30 im wesentlichen erhalten, auch wenn die Fläche 39 nun in der Ebene durch die Achsen der Befestigungsbohrungen 19 verläuft und somit der Gewindeauslauf 23 bis unmittelbar an die Befestigungsbohrungen 19 heranführt.

## Patentansprüche

1. Hydraulisches Steuerventil in Modulbauweise mit einem die Ventilelemente in Ausnehmungen aufweisenden Gehäuse (31), in dem wenigstens ein Gewindeteil (32) befestigt ist, das die Ausnehmung nach außen verschließt, wozu das Gewindeteil ein Außengewinde aufweist, mit dem es in ein in einer Öffnung der Ausnehmung zu einer Außenwand des Gehäuses (31) hin liegendes Innengewinde geschraubt ist, wobei ein zwischen beide Teile eingelegter Dichtring (36) die Abdichtung nach außen übernimmt und mit wenigstens zwei Befestigungsbohrungen (19), welche das Gehäuse (31) durchdringen und in der Nähe des Innengewindes verlaufen, dadurch gekennzeichnet, daß am Gewindeteil (32) ein das Außengewinde (15) tragender, hülsenförmiger Abschnitt (33) in einen rohrförmigen Endabschnitt (35) mit kleinerem Durchmesser übergeht, daß dieser Endabschnitt (35) in die von den beiden Befestigungsbohrungen (19) gebildete Ebene hineinragt und mit seinem freien Ende an dem die Abdichtung nach außen übernehmenden Dichtring (36) anliegt.

2. Steuerventil nach Anspruch 1, dadurch gekennzeichnet, daß das Innengewinde (16) im Gehäuse (31) in die Befestigungsbohrungen (19) ausläuft.

3. Steuerventil nach Anspruch 1 oder 2, dadurch gekennzeichnet, daß die Ausnehmung (12) im Gehäuse (31) eine abgesetzte Bohrung (37) aufweist, in die der Endabschnitt (35) ragt und auf deren Boden der Dichtring (36) liegt und daß der Außen-Durchmesser des Endabschnitts (35) kleiner ist als der freie Abstand zwischen den Befestigungsbohrungen (19).

4. Steuerventil nach einem der Ansprüche 1 bis 3, dadurch gekennzeichnet, daß der Durchmesser des Innengewindes (16) im wesentlichen dem Achsabstand beider Befestigungsbohrungen (19) gleicht.

5. Steuerventil nach einem der Ansprüche 1 bis 4, dadurch gekennzeichnet, daß das Gehäuse (31) an entgegengesetzten Außenwänden (13, 41) Gewindeteile (32) gleicher Bauart aufweist.

6. Steuerventil nach einem der Ansprüche 1 bis 5, dadurch gekennzeichnet, daß am Gewindeteil (32) der hülsenförmige Abschnitt (33) über eine Schulter (34) in den rohrförmigen Endabschnitt (35) übergeht, der mit seiner am freien Ende liegenden Stirnseite an dem im Gehäuse (31) eingelegten Dichtring (36) anliegt.

## Claims

1. Hydraulic control valve of modular construction with a housing (31) which has the valve elements in cut-outs and in which there is fixed at least one threaded part (32) which closes the cut-out off from the outside, for which purpose the threaded part has an external thread by means of which it is screwed into an internal thread located in an opening in the recess towards an outer wall of the housing (31), a sealing ring (36) inserted between the two parts providing a seal with respect to the outside, and with at least two fixing holes (19), which pass through the housing (31) and extend in the vicinity of the internal thread, characterized in that a sleeve-shaped portion (33) bearing the external thread (15) merges into a tubular end portion (35) of smaller diameter on the threaded part (32), in that this end portion (35) projects into the plane formed by the two fixing holes (19) and rests by its free end against the sealing ring (36) providing a seal with respect to the outside.

2. Control valve according to Claim 1, characterized in that the internal thread (16) in the housing (31) runs out into the fixing holes (19).

3. Control valve according to Claim 1 or 2, characterized in that the cut-out (12) in the housing (31) has an offset hole (37) into which the end portion (35) projects and on the bottom of which the sealing ring (36) rests, and in that the outside diameter of the end portion (35) is smaller than the clearance between the fixing holes (19).

4. Control valve according to one of Claims 1 to 3, characterized in that the diameter of the internal thread (16) is essentially equal to the centre distance between the two fixing holes (19).

5. Control valve according to one of Claims 1 to 4, characterized in that the housing (31) has threaded parts (32) of identical design on opposite outer walls (13, 41).

6. Control valve according to one of Claims 1 to 5, characterized in that on the threaded part (32) the sleeve-shaped portion (33) merges via a shoulder (34) into the tubular end portion (35), which rests by its end situated at the free end against the sealing ring (36) inserted into the housing (31).

## Revendications

1. Vanne pilote hydraulique ayant un mode de construction modulaire comprenant un boîtier (31), qui présente les éléments de la vanne dans des évidements, boîtier dans lequel est fixée au moins une pièce filetée (32), qui ferme l'évidement vers l'extérieur, la pièce filetée présentant pour cela un filetage extérieur, avec lequel elle est vissée dans un filetage intérieur qui se trouve dans un orifice de l'évidement en direction d'une paroi extérieure du boîtier (31), une bague d'étanchéité (36) étant insérée entre deux pièces assurant l'étanchéité vers l'extérieur, tandis qu'au moins deux alésages de fixation (19) passent à travers le boîtier (31) et s'étendent à proximité du filetage intérieur,
caractérisé en ce que
sur la pièce filetée (32) une section (33) portant le filetage extérieur (15) et ayant la forme d'une douille se transforme en une section finale (35) de forme tubulaire ayant un diamètre plus petit, de telle sorte que cette section terminale (35) pénètre dans le plan formé par les deux alésages de fixation (19) et repose par son extrémité libre sur la bague d'étanchéité (36) qui assure l'étanchéité vers l'extérieur.

2. Vanne pilote selon la revendication 1,
caractérisée en ce que
le filetage intérieur (16) dans le boîtier (31) se déroule dans les alésages de fixation (19).

3. Vanne pilote selon la revendication 1 ou 2,
caractérisée en ce que
- l'évidement (12) dans le boîtier (31) présente un alésage déporté (37), dans lequel pénètre la section terminale (35) et sur le fond duquel repose la bague d'étanchéité (36), et
- le diamètre extérieur de la section terminale (35) est plus petit que l'intervalle libre entre les alésages de fixation (19).

4. Vanne pilote selon l'une des revendication 1 à 3,
caractérisée en ce que
le diamètre du filetage intérieur (16) est sensiblement égal à la distance axiale des deux alésages de fixation (19).

5. Vanne pilote selon l'une des revendication 1 à 4,
caractérisée en ce que
le boîtier (31) présente sur les parois opposées extérieures (13, 41) des pièces filetées (32) du même type de construction.

6. Vanne pilote selon l'une des revendication 1 à 5,
caractérisée en ce que
sur la pièce filetée (32) la section (33) en forme de douille se transforme au moyen d'un épaulement (34) en la section terminale (35) de forme tubulaire, qui repose par son côté frontal se trouvant à son extrémité libre sur la bague d'étanchéité (36) insérée dans le boîtier (31).
